# EUROPÄISCHE PATENTSCHRIFT

(11) **EP 0 870 914 B1**
(45) Veröffentlichungstag und Bekanntmachung des Hinweises auf die Patenterteilung: **07.11.2001**
(21) Anmeldenummer: 98104569.3
(22) Anmeldetag: 13.03.1998
(51) Int. Cl.: F02B 37/24, F02D 33/02

(54) **Verfahren zur Steuerung bzw. Regelung des Ladeluftmassenstroms einer Brennkraftmaschine mit einem Abgasturbolader mit verstellbarer Turbinengeometrie**
Method to control/regulate the charged air mass flow of an internal combustion engine with an exhaust gas turbocharger comprising a variable geometry turbine
Procédé pour la commande-régulation du débit de la masse de l'air de suralimentation pour moteur à combustion interne suralimenté à turbocompresseur avec une turbine à géométrie variable

(30) Priorität: 12.04.1997 DE 19715237
(43) Veröffentlichungstag der Anmeldung: 14.10.1998
(73) Patentinhaber: DaimlerChrysler AG, 70567 Stuttgart (DE)
(72) Erfinder: Bischoff, Roland, 73655 Plüderhausen (DE)

(56) Entgegenhaltungen:
- EP-A- 0 323 256
- EP-A- 0 747 585
- DE-C- 4 025 901
- DE-C- 19 531 871

## Beschreibung

Die Erfindung betrifft ein Verfahren zur Steuerung bzw. Regelung des Ladeluftmassenstroms einer Brennkraftmaschine mit einem Abgasturbolader mit verstellbarer Turbinengeometrie im dynamischen Betrieb beim positiven Lastsprung nach dem Oberbegriff des Anspruches 1 bzw. bei einem Regelverfahren nach dem Oberbegriff des Anspruches 4.

Die Leistungsabgabe einer Brennkraftmaschine ist proportional dem Luftdurchsatz und der Dichte der zugeführten Verbrennungsluft und ist daher durch Aufladung, das heißt durch Vorverdichten der Verbrennungsluft vor dem Eintritt in die Brennkraftmaschine gegenüber einer Brennkraftmaschine ohne Aufladung und dabei gleichem Brennraumvolumen und Drehzahl erhöhbar. Die Aufladung kann durch einen Abgasturbolader erfolgen, welcher im wesentlichen aus zwei Strömungsmaschinen besteht, nämlich einer vom Abgasstrom der Brennkraftmaschine getriebenen Turbine und einem von der Turbine angetriebenen Verdichter, welcher abhängig von seiner Drehzahl einen Frischluftstrom für die Brennkraftmaschine vorverdichtet. Die Turbine und der Verdichter sind durch eine Laderwelle verbunden und rotieren synchron. Der Ladedruck stromab des Verdichters und der Abgasdruck stromauf der Turbine sind infolge des Momentengleichgewichtes an der Laderwelle miteinander gekoppelt, wobei infolge des auf den Verdichter wirkenden Ladedruckes der Abgasstrom stromauf der Turbine aufgestaut wird. Der Staudruck des Abgasstromes wird entsprechend einem Druckübersetzungsverhältnis, welches durch die jeweiligen Strömungsquerschnitte der Turbine und des Verdichters festgelegt ist, in Ladedruck des zur Brennkraftmaschine geförderten Ladeluftstroms übersetzt.

Mit zunehmender Leistung der Brennkraftmaschine nimmt der Ladeluftbedarf zu, so daß ein entsprechend höherer Ladedruck erzeugt werden muß. Mittels einer verstellbaren Turbinengeometrie zum Beispiel durch verstellbare Leitschaufeln der Turbine kann der Anströmquerschnitt der Turbine und somit die vom Abgasturbolader auf den Ladeluftstrom zu übertragende Staudruckenergie variiert werden. Die Turbinengeometrie kann dabei zwischen der Öffnungsstellung mit maximalem Anströmquerschnitt und der Schließstellung mit minimalem Anströmquerschnitt jede beliebige Stellung einnehmen. In jedem stationären Betriebszustand der Brennkraftmaschine wird die Turbinengeometrie in eine Stellung mit einem spezifischen Anströmquerschnitt gebracht, die einen Ladeluftdurchsatz mit einem minimalen Kraftstoffverbrauch der Brennkraftmaschine ergibt. Der Anströmquerschnitt wird dabei mit zunehmender Maschinenleistung reduziert, so daß mit einer entsprechend erhöhten Verdichterleistung der Ladedruck und damit der Ladeluftmassenstrom zur Brennkraftmaschine dem jeweils vorliegenden stationären Betriebszustand angepaßt ist.

Im dynamischen Betrieb der Brennkraftmaschine, das heißt beim Lastsprung zwischen zwei stationären Betriebszuständen unter Zunahme der Betriebslast wird also die Turbinengeometrie entsprechend in eine Stellung mit einem kleineren Anströmquerschnitt für den Abgasstrom gebracht, wobei jedoch bei einer kontinuierlichen Schließbewegung der Turbinengeometrie die erforderliche Beschleunigung des Abgasturboladers zur Erzeugung eines der Lasterhöhung entsprechenden Ladedruckanstieges nicht möglich ist. Ein zu langsamer Aufbau des Ladedruckes während des dynamischen Betriebes führt zu Luftmangelverbrennungen und somit zu einem erhöhten Kraftstoffverbrauch der Brennkraftmaschine und hohen Abgasemissionen. Um den Abgasturbolader rasch zu beschleunigen ist bekannt, unmittelbar mit der Erhöhung der Lastanforderung die Turbinengeometrie in die Schließstellung zu führen. Der minimale Anströmquerschnitt der Turbine führt zu einem raschen Anstieg des Abgasstaudrucks, so daß infolgedessen die Turbine und somit der Verdichter stark beschleunigt werden. Anschließend wird die Turbine öffnend verstellt und in die vorbekannte Stellung mit einem dem angeforderten stationären Betriebszustand der Brennkraftmaschine entsprechenden Anströmquerschnitt gebracht. Der Staudruck vor der Turbine steigt jedoch während der Beschleunigung des Abgasturboladers erheblich schneller an als der Ladedruck hinter dem Verdichter, so daß es ohne geeignete Gegenmaßnahmen zu einem zu hohen Abgasstaudruck und damit zu Gaswechselverlusten und einer Verschlechterung des Wirkungsgrades der Brennkraftmaschine kommt.

Die DE 40 25 901 C1 schlägt daher ein Verfahren vor, bei dem die Turbinengeometrie zur Steuerung des Ladedruckes bis zum Erreichen eines vorgegebenen Grenzwertes des Abgasdruckes vor der Turbine nach einer ersten Kennlinie und bei überschreiten des Grenzabgasdruckes nach einer zweiten Kennlinie eingestellt wird. Die Kennlinien werden aus einer Messung des Ladedruckes ermittelt, wobei die erste Kennlinie der tatsächlichen Ladedruckänderung während der dynamischen Betriebsphase und die zweite Kennlinie einem fiktiven Ladedruckverlauf oberhalb des tatsächlichen Ladedruckanstieges entspricht. Die Umschaltung zwischen den Kennlinien erfolgt durch einen Grenzdruckschalter mit zwei Stellungsmöglichkeiten, welcher vom Abgasdruck beaufschlagt wird und bei Erreichen des vorgegebenen Grenzdruckes die Schalterposition wechselt. Um ein rasches Hochlaufen des Abgasturboladers und damit einen steilen Ladedruckanstieg zu erreichen, wird bei dem bekannten Verfahren die Turbinengeometrie in Schließstellung gehalten, bis der Abgasdruck den Grenzwert erreicht und der Grenzdruckschalter seinen Schaltzustand ändert.

Die Verstellung der Turbinengeometrie und damit die Steuerung des Ladeluftmassenstroms während der dynamischen Betriebsphase beim Lastsprung zwischen zwei stationären Betriebszuständen der Brennkraftmaschine mit dem aktuellen Ladedruckanstieg als Führungsgröße ermöglicht zwar eine Beschleunigung des Ladedruckanstieges, jedoch wird der schädlichen Erhöhung des Abgasdruckes nur durch eine Begrenzung begegnet, so daß häufig ungünstige Spülgefälle entsprechend dem Differenzdruck zwischen Abgasdruck und Ladedruck auftreten und damit der Wirkungsgrad der Brennkraftmaschine herabgesetzt wird. Weiterhin verlängert die Verhinderung der Grenzwertüberschreitung des Abgasdruckes die Aufbaudauer des angeforderten stationären Drehmomentes der Brennkraftmaschine.

Es ist Aufgabe der vorliegenden Erfindung, ein Verfahren zur Steuerung bzw. Regelung des Ladeluftmassenstroms einer Brennkraftmaschine mit einem Abgasturbolader mit verstellbarer Turbinengeometrie zu schaffen, mit dem im dynamischen Betrieb beim Lastsprung zwischen zwei stationären Betriebszuständen der Brennkraftmaschine unter Zunahme der Betriebslast bei optimalem Wirkungsgrad der Brennkraftmaschine die Dauer bis zum Erreichen des angeforderten stationären Betriebszustandes verkürzt ist.

Diese Aufgabe wird erfindungsgemäß bei einem Steuerverfahren mit den Merkmalen des Anspruches 1 und bei einem Regelverfahren mit den Merkmalen des Anspruches 4 gelöst.

Sehr gute Hochlaufeigenschaften des Abgasturboladers und ein rasches Erreichen eines angeforderten stationären Betriebszustandes der Brennkraftmaschine ist mit einem Steuerverfahren des Ladeluftmassenstroms erreichbar, bei dem der aktuelle Ladedruck bzw. Ladedruckanstieg ermittelt wird und als Betriebsparameter jedem Ladedruckwert eine mit dem Ladedruckanstieg zunehmende Kraftstoff-Einspritzmenge zugeordnet wird. Die Turbine verbleibt in der Schließstellung mit minimalem Anströmquerschnitt, bis die augenblicklich eingespritzte Kraftstoffmenge den als Verschlußführungsgröße vorbekannten Einspritzmengenwert erreicht. Dabei wird die dem angeforderten stationären Betriebszustand der Brennkraftmaschine zugeordnete Kraftstoff-Einspritzmenge als Verschlußführungsgröße vorgegeben. Die Begrenzung der maximal möglichen Kraftstoff-Einspritzmenge entsprechend dem aktuellen Ladedruck im dynamischen Betrieb der Brennkraftmaschine verhindert zuverlässig schädliche Rauchstöße, welche durch eine zu große Einspritzmenge bzw. einen hinter dem erforderlichen Wert für die augenblicklich eingespritzte Kraftstoffmenge zurückbleibenden Ladedruck auftreten würden.

Die jedem Ladedruckwert und jedem Betriebszustand der Brennkraftmaschine jeweils zugeordnete Kraftstoff-Einspritzmenge ist vorteilhaft in einem Rauchkennfeld abgelegt. Es kann daher der schnellstmögliche Anstieg der jeweiligen Einspritzmengen ohne auftretende Rauchstöße gesteuert werden. Eine Regelung des Ladeluftmassenstroms während der dynamischen Betriebsphase zum raschen Einnehmen des angeforderten stationären Betriebszustandes der Brennkraftmaschine wird dadurch erreicht, daß eine kontinuierlich öffnende Stellbewegung der Turbinenleitvorrichtung während einer Stellphase durch laufende Ermittlung und Angleich einer Stellregelgröße an eine vorbekannte Stellführungsgröße geregelt wird. Als Stellregelgröße wird dabei vorteilhaft ein Differenzdruck zwischen dem Ladedruck und dem Abgasdruck der Brennkraftmaschine ermittelt, wobei als Stellführungsgröße ein Soll-Differenzdruck vorgegeben wird. Die Einregelung auf den vorgegebenen Soll-Differenzdruck während des dynamischen Betriebes bewirkt, daß das Spülgefälle zwischen Auslaßtrakt und Einlaßtrakt der Brennkraftmaschine in einem günstigen Bereich im Hinblick auf den Wirkungsgrad der Brennkraftmaschine gehalten ist. Gaswechselverluste, bedingt durch einen relativ zum Ladedruck zu hohen Abgasgegendruck, welcher beim Ausschieben der Abgase durch die Kolben der Brennkraftmaschine erst überwunden werden müßte, werden durch die Einregelung eines bestimmten Spülgefälles auf ein Minimum reduziert.

Entsprechend der Bauart und der Betriebscharakteristik der Brennkraftmaschine wird ein optimaler Soll-Differenzdruck, das heißt ein optimales Spülgefälle für den dynamischen Betrieb zum raschen Lastsprung zwischen zwei stationären Betriebszuständen der Brennkraftmaschine vorgegeben. Die geregelte Stellbewegung der Turbinengeometrie beginnt am Ende einer Verschlußphase, während der die Turbine in Schließstellung gehalten wird, bis ein laufend ermittelter Betriebsparameter den Sollwert einer vorbekannten Verschlußführungsgröße erreicht oder überschreitet.

Unmittelbar nach der Erhöhung der Lastanforderung aus einem Stationärbetrieb der Brennkraftmaschine heraus wird die Turbinengeometrie in Schließstellung überführt und als Betriebsparameter ein aktuelles Luftverhältnis der entsprechend dem Ladedruckanstieg zur Verfügung stehenden Ladeluftmenge und einer Kraftstoff-Einspritzmenge pro Arbeitsspiel der Brennkraftmaschine ermittelt. Als Verschlußführungsgröße wird ein bestimmtes Grenzluftverhältnis vorgegeben. Der Abgasturbolader wird während der Verschlußphase stark beschleunigt, so daß zunächst ein rascher Ladedruckanstieg erfolgt und daher die Gefahr der Luftmangelverbrennung reduziert wird. Der erhöhten Einspritzmenge nach dem Lastsprung kann durch die Beschleunigung des Förderleistungsaufbaus des Verdichters in kurzer Zeit der zur Einhaltung optimaler Luftverhältnisse erforderliche Ladeluftmassenstrom beigeordnet werden.

In vorteilhafter Weise wird bei einem Verfahren zur Regelung des Ladeluftmassenstroms ein bestimmtes Luftverhältnis für den angeforderten stationären Betriebszustand der Brennkraftmaschine als Verschlußführungsgröße und als Stellregelgröße für die Turbinenleitvorrichtung vorgegeben. Das Überführen der Leitvorrichtung in die Schließstellung unmittelbar nach der Erhöhung der Lastanforderung an die Brennkraftmaschine bewirkt einen sofortigen Fall des augenblicklichen Luftverhältnisses durch die Erhöhung der Kraftstoff-Einspritzmenge, jedoch wird durch die starke Beschleunigung des Abgasturboladers während der Verschlußphase der Leitvorrichtung der Ladedruck rasch erhöht und somit wieder günstige Luftverhältnisse bewirkt. Sobald der für den angeforderten stationären Betriebszustand der Brennkraftmaschine vorgegebene Sollwert des Luftverhältnisses erreicht ist, wird die öffnende Stellbewegung der Turbinengeometrie in die Wege geleitet und durch ständigen Angleich des ermittelten Luftverhältnisses an den vorgegebenen Sollwert geregelt. Auf diese Weise können bei dynamischen Lastsprüngen im Betrieb der Brennkraftmaschine Ladungswechselverluste durch hohe Abgasgegendrücke vermieden werden, so daß der Wirkungsgrad der Brennkraftmaschine erhöht ist. Wird ein nicht zu unterschreitendes Grenzluftverhältnis vorgegeben, bei dessen Erreichen nach dem Verbringen der Leitvorrichtung in die Schließstellung unmittelbar nach dem Erhöhen der Lastanforderung an die Brennkraftmaschine die Kraftstoff-Einspritzmenge zwecks Abmagerung des Gemisches reduziert wird, so können auch in dieser kritischen, kurzen Betriebsphase beim Laststrom Luftmangelverbrennungen zuverlässig ausgeschlossen werden.

Das Verfahren zur Steuerung und das Verfahren zur Regelung des Ladeluftmassenstroms werden nachstehend anhand der Zeichnung näher erläutert. Es zeigen
- Fig. 1: in schematischer Darstellung eine Vorrichtung zur Durchführung der Verfahren,
- Fig. 2a bis 2d: in graphischer Darstellung den zeitlichen Verlauf verschiedener Betriebsparameter der Brennkraftmaschine bei Anwendung eines Steuerverfahrens des Ladeluftmassenstroms,
- Fig. 3a bis 3d: in graphischer Darstellung den Verlauf von Betriebsparametern der Brennkraftmaschine über der Zeit bei Anwendung eines Regelverfahrens des Ladeluftmassenstroms.
- Fig. 4a bis 4b: in graphischer Darstellung den Verlauf von Betriebsparametern der Brennkraftmaschine über der Zeit bei Anwendung eines alternativen Regelverfahrens des Ladeluftmassenstroms.

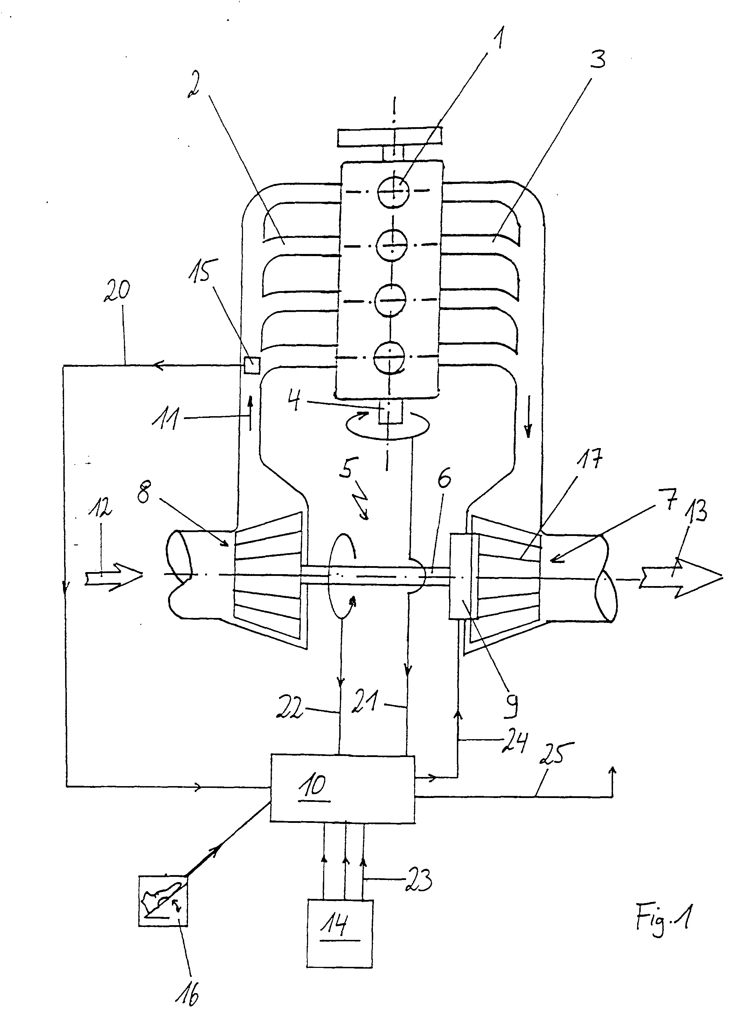

Fig. 1 zeigt eine Brennkraftmaschine 1 mit einem Abgasturbolader 5 zur Erzeugung eines verdichteten Ladeluftmassenstroms 11 im Einlaßtrakt 2 der Brennkraftmaschine 1. Der Abgasturbolader 5 besteht aus einer Turbine 7, welche im Auslaßtrakt 3 der Brennkraftmaschine 1 angeordnet ist und vom Abgasstrom 13 beaufschlagt und angetrieben wird, und einem Verdichter 8 im Einlaßtrakt 2. Beide Strömungsmaschinen (Turbine 7/Verdichter 8) sind durch eine Laderwelle 6 mechanisch verbunden und laufen daher synchron um. Die Strömungsenergie des Abgasstromes 13 wird entsprechend dem Verhältnis zwischen Abgasstaudruck vor der Turbine 7 und Ladedruck stromab des Verdichters, das heißt in Abhängigkeit von dem Verhältnis der jeweiligen Strömungsquerschnitte der Turbine 7 und des Verdichters 8 auf den vom Verdichter 8 angesaugten Frischluftstrom 12 übertragen.

Um mit zunehmender Betriebslast der Brennkraftmaschine einen zunehmend höheren Ladedruck zu erzeugen und damit einen höheren Ladeluftmassenstrom 11 zu fördern, ist der Anströmquerschnitt der Turbine 7 durch eine verstellbare Turbinengeometrie verringerbar. Ein Stellantrieb 9 wirkt auf eine verstellbare Leitvorrichtung 17 der Turbine 7, zum Beispiel verstellbare Leitschaufeln, ein. Dabei wird ein Anströmquerschnitt der Turbine 7 zur Beaufschlagung mit dem Abgasstrom 13 freigegeben, welcher mit dem festgelegten Strömungsquerschnitt des Verdichters 8 ein bestimmtes Druckübersetzungsverhältnis bildet, mit dem der in einem beliebigen stationären Betriebszustand der Brennkraftmaschine 1 erforderliche Ladedruck im Einlaßtrakt 2 erzeugt wird. Dem Stellantrieb 9 wird zur Einstellung der Turbinengeometrie ein Stellsignal 24 zugeführt, welches von einer Steuer/Regler-Einheit 10 in Abhängigkeit von der Lastanforderung 16 an die Brennkraftmaschine 1, zum Beispiel durch ein Fahrpedal, erzeugt wird. Jedem stationären Betriebszustand der Brennkraftmaschine 1 ist ein bestimmter Anströmquerschnitt der Turbine 7 zugeordnet, welcher mit zunehmender Betriebslast abnimmt, so daß mit einer Verstärkung der Aufstauung des Abgasstromes 13 vor der Turbine 7 die Drehzahl des Abgasturboladers 5 und somit die Verdichterleistung erhöht ist. Die jeweils einem bestimmten stationären Betriebszustand der Brennkraftmaschine 1 zugeordneten Einstellungen der Leitvorrichtung 17 und damit der Anströmquerschnitte der Turbine 7 sind in einem Kennfeld 14 abgelegt, dem die Steuer/Regler-Einheit 10 die der jeweils vorliegenden Lastanforderung 16 entsprechenden Kennfelddaten 23 entnimmt.

Bei einem positiven Lastsprung, das heißt bei einer Erhöhung der Lastanforderung 16 wird, um den Abgasturbolader 5 rasch zu beschleunigen und damit eine möglichst schnelle Erhöhung der Förderleistung des Verdichters 8 zu erreichen, die Turbinengeometrie zunächst in Schließstellung mit minimalem Anströmquerschnitt gebracht.

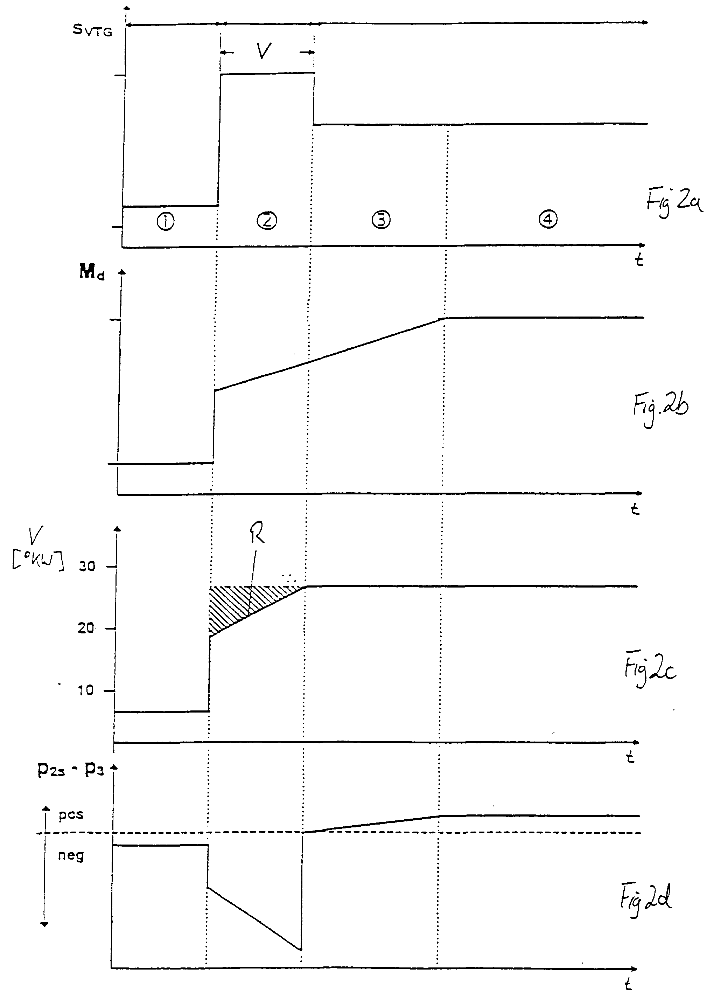

Bei einem Verfahren zur Steuerung des Ladeluftmassenstromes 11 bestimmt die Steuer/Regler-Einheit 10 die einzuspritzenden Kraftstoffmengen pro Arbeitsspiel der Brennkraftmaschine 1 durch Zuleitung entsprechender Einspritzsignale 25. Auch im dynamischen Lastsprungbetrieb beim Beschleunigen des Abgasturboladers 5 wird die einzuspritzende Kraftstoffmenge entsprechend dem aktuellen Ladedruck im Einlaßtrakt 2 zugemessen. Entsprechende Kennfelddaten 23 über die maximal mögliche Einspritzmenge, bei der mit dem förderbaren Ladeluftmassenstrom 11 keine Rauchstöße auftreten, sind im Kennfeld 14 abgelegt und von der Steuer/Regler-Einheit 10 bei Bedarf entnehmbar. Die Turbine 7 wird so lange in Schließstellung mit minimalem Anströmquerschnitt gehalten, bis der sich aufbauende Ladedruck einen Wert angenommen hat, bei dem bereits die dem angeforderten stationären Betriebszustand der Brennkraftmaschine schließlich zugeordnete Einspritzmenge zumessbar ist. Der aktuelle Ladedruck im Einlaßtrakt 2 kann von einem Drucksensor 15 gemessen werden, welcher der Steuer/Regler-Einheit 10 ein korrelierendes Ladedrucksignal 20 zuführt. Nachdem der zur Steuerung des Ladeluftmassenstromes 11 verwendete Betriebsparameter der Brennkraftmaschine 1, nämlich die Kraftstoff-Einspritzmenge am Ende der Verschlußphase den als Führungsgröße vorgegebenen Einspritzmengenwert des angeforderten stationären Betriebszustandes erreicht hat, wird die Leitvorrichtung 17 der Turbine 7 öffnend verstellt und der stationär vorgesehene Anströmquerschnitt eingestellt. Der Verstellweg S_{VTG} der Turbinenleitvorrichtung 17 ist in Fig. 2a graphisch über der Betriebszeit der Brennkraftmaschine 1 dargestellt. Ausgehend vom stationären Betriebszustand der Brennkraftmaschine während der Phase 1 und der entsprechend der geringen Betriebslast weiten öffnungsstellung wird die Turbinengeometrie während der Phasen 2 und 3 mit dynamischen Stellmaßnahmen in eine öffnungsstellung mit geringerem Anströmquerschnitt gebracht, welcher dem stationären Betriebszustand der Brennkraftmaschine mit erhöhter Betriebslast in der Phase 4 entspricht. Fig. 2b zeigt den Verlauf des Drehmomentes der Brennkraftmaschine, welches in den Stationärphasen 1 und 4 konstant ist und während der Beschleunigung des Abgasturboladers in den Phasen 2 und 3 rasch erhöht wird.

Die Verschlußphase 2, während der sich die Turbine in der Schließstellung mit minimalem Anströmquerschnitt und dabei maximalem Verstellweg S_{VTG} (Fig. 2a) zur maximalen Beschleunigung des Abgasturboladers und Aufbau des Ladedruckes befindet, wird begrenzt durch den Anstieg der Kraftstoff-Einspritzmenge pro Arbeitsspiel der Brennkraftmaschine. In dem Diagramm der Fig. 2c ist der Verlauf der Einspritzmenge während der Lastaufschaltung repräsentiert durch die Einspritzzeit entsprechend einem während der Einspritzung umlaufenden Kurbelwellenwinkel dargestellt. Während der stationären Betriebsphasen 1 und 4 wird eine bestimmte Kraftstoffmenge dem jeweiligen Betriebszustand zugeordnet eingespritzt. Im Moment des Lastsprunges am Ende der stationären Betriebsphase 1 wird die Einspritzmenge erhöht, und zwar auf einen bei dem herrschenden Ladedruck maximal möglichen Wert. Die maximal mögliche Kraftstoffmenge für jeden möglichen Ladedruckwert, bei dem keine Rauchstöße oder Luftmangelverbrennungen auftreten, sind als Rauchkennfeld hinterlegt. Es wird daher am Beginn der Verschlußphase 2 die Kraftstoffmenge bis an die Rauchbegrenzung R angehoben und anschließend proportional mit dem Ladedruckanstieg erhöht. Erreicht die einzuspritzende Kraftstoffmenge den aus dem Kennfeld vorbekannten Wert der in der stationären Betriebsphase 4 einzuspritzenden Kraftstoffmenge, so wird die Turbine des Abgasturboladers öffnend verstellt.

Die sofortige Einstellung der verstellbaren Turbinengeometrie auf einen stationär erforderlichen Anströmquerschnitt bereits in der dynamischen Betriebsphase 3, in der der Abgasturbolader weiter beschleunigt wird und somit das Drehmoment M_{d} gemäß Fig. 2b erhöht wird, erlaubt die Durchführung des Lastsprunges mit einem optimalen Wirkungsgrad. Voraussetzung für die Optimierung des Wirkungsgrades ist ein günstiges Spülgefälle zwischen Einlaßtrakt und Auslaßtrakt der Brennkraftmaschine. Der Verlauf des Spülgefälles vor, während und nach dem Lastsprung in den Phasen 1 bis 4 ist in Fig. 2d dargestellt. Aufgetragen ist über der Betriebszeit der Brennkraftmaschine der Differenzdruck p₂ₛ - p₃ zwischen dem Ladedruck p₂ₛ im Einlaßtrakt 2 und dem Abgasgegendruck p₃ im Auslaßtrakt 3 der Brennkraftmaschine 1. Das größte negative Spülgefälle ergibt sich dabei natürlich am Ende der Verschlußphase 2 der verstellbaren Turbinengeometrie, da der Abgasgegendruck p₃ durch die Stauwirkung des minimalen Turbinenquerschnitts zunehmend erhöht wird. Rechtzeitig vor Erreichen kritischer Abgasgegendruck-Überhöhungen und damit Wirkungsgradverlusten der Brennkraftmaschine werden jedoch der Turbinenquerschnitt entsprechend Fig. 2a vergrößert und augenblicklich günstige Spülgefälle hergestellt.

Das Verfahren zur Steuerung des Ladeluftmassenstroms mittels Begrenzung der Verschlußphase 2 der verstellbaren Turbinengeometrie unter Zugrundelegung der eingespritzten Kraftstoffmenge ermöglicht insbesondere bei Lastsprüngen im mittleren Drehzahlbereich der Brennkraftmaschine gute Hochlaufeigenschaften, das heißt rasche Beschleunigung des Abgasturboladers und damit schneller Aufbau des Ladedrucks und des Drehmomentes im angeforderten stationären Betriebszustand der Brennkraftmaschine. Das beschriebene Verfahren zur Steuerung des Ladeluftmassenstroms ist mit geringem Aufwand durchführbar, da lediglich ein Ladedrucksignal 20 erzeugt und der Steuereinheit 10 zugeführt werden muß und sämtliche weiteren Informationen den Kennfelddaten 23 entnehmbar sind.

Bei einem Verfahren zur Regelung des Ladeluftmassenstroms wird bei der in Fig. 1 gezeigten Anordnung zunächst von der Steuer/Regler-Einheit 10 bei einer Erhöhung der Lastanforderung 16 die Leitvorrichtung 17 der Turbine 7 in Schließstellung gebracht und das aktuelle Luftverhältnis der nunmehr erhöhten Kraftstoff-Einspritzmenge und dem Ladeluftmassenstrom 11, welcher vom Ladedruckanstieg abhängt, gebildet. Zur Ermittlung des Luftverhältnisses wird der Steuer/Regler-Einheit 10 neben Kennfelddaten 23 aus dem Kennfeld 13 zur Erzeugung der Einspritzbefehle 25 für die Brennkraftmaschine ein dem Ladedruck entsprechendes Ladedrucksignal 20 zugeführt, welches von einem Drucksensor 15 im Einlaßtrakt 2 der Brennkraftmaschine 1 erzeugt wird. Aus dem Kennfeld 14 wird der Steuer/Regler-Einheit 10 ein bestimmtes Grenzluftverhältnis als Verschlußführungsgröße vorgegeben, mit dem das ermittelte aktuelle Luftverhältnis verglichen wird. Die Turbine 7 wird in der Schließstellung zur Beschleunigung des Abgasturboladers 5 gehalten, bis das ermittelte Luftverhältnis den Grenzwert der vorgegebenen Verschlußführungsgröße überschreitet. Mit dieser Maßnahme ist der schnellstmögliche Ladedruckanstieg zu erreichen, wobei ein kritischer Bereich zu Beginn der dynamischen Betriebsphase unmittelbar nach der Erhöhung der Lastanforderung 16, in dem das Risiko der Luftmangelverbrennung infolge eines zu geringen Ladeluftmassenstroms 11 besteht, schnell verlassen werden kann. Für den gesamten Drehzahl- und Lastbereich der Brennkraftmaschine sowie für jeden möglichen Lastsprung wird als Verschlußführungsgröße ein bestimmtes, auf die Betriebscharakteristik der Brennkraftmaschine 1 abgestimmtes Grenzluftverhältnis im Kennfeld 14 hinterlegt und bei Bedarf von der Steuer/Regler-Einheit 10 abgerufen.

Nachdem das ermittelte Luftverhältnis den Wert der Verschlußführungsgröße überschreitet, wird die Turbinenleitvorrichtung 17 kontinuierlich öffnend verstellt, wobei die Stellbewegung während einer Stellphase durch laufende Ermittlung und Angleich einer Stellregelgröße an eine vorbekannte Stellführungsgröße geregelt wird. Die Reglereinheit 10 ermittelt dabei als Stellregelgröße den Differenzdruck zwischen einem Ladedruck im Einlaßtrakt 2 und einem Abgasdruck im Auslaßtrakt 3 der Brennkraftmaschine. Als Stellführungsgröße wird ein bestimmter Soll-Differenzdruck vorgegeben und im Kennfeld 10 hinterlegt. Dieser Differenzdruck ist das Spülgefälle zwischen dem Ladeluftstrom 11 im Einlaßtrakt 2 und dem Abgasstrom 13 im Auslaßtrakt 3 der Brennkraftmaschine 1. Die Einhaltung des als Stellführungsgröße bei dem Regelverfahren vorgegebenen Spülgefälles ist ausschlaggebend für das Erreichen eines optimalen Wirkungsgrades der Brennkraftmaschine während des dynamischen Aufschaltbetriebes zwischen stationären Betriebszuständen. Die Reglereinheit 10 zieht zur Ermittlung des aktuellen Differenzdruckes während der Hochlaufphase des Abgasturboladers 5 jeweils den augenblicklich herrschenden Ladedruck im Einlaßtrakt 2 und den Abgasdruck im Auslaßtrakt 3 heran.

Die Information über den Ist-Wert des Ladedruckes wird durch das vom Drucksensor 15 erzeugte Ladedrucksignal 20 zugeführt. Grundsätzlich ist es möglich, die zur Durchführung des Regelverfahrens notwendige Kenntnis des augenblicklich stromauf der Turbine 7 herrschenden Abgasdruckes auf ähnlichem Wege wie den Ladedruck durch einen im Auslaßtrakt 3 der Brennkraftmaschine 1 angeordneten Drucksensor zu erlangen. Besonders vorteilhaft wird jedoch der Abgasdruck von der Reglereinheit 10 aus dem Ladedrucksignal und weiteren bekannten Steuermeßgrößen der Brennkraftmaschine 1 ermittelt. Die Drehzahl der Kurbelwelle 4 der Brennkraftmaschine 1 sowie die Temperatur des Ladeluftmassenstroms 11 sind einem Motormanagement zwangsweise bekannt und können daher zur Ermittlung des Abgasstroms ohne weiteren Aufwand herangezogen werden. Weiterhin sind zur Ermittlung des Abgasdruckes lediglich die Kenntnis wahlweise des Verdichtermassenstroms oder des Turbinenmassenstroms sowie die Drehzahl des Abgasturboladers 5 notwendig.

Der Reglereinheit 10 kann neben einem Drehzahlsignal 21 der Kurbelwelle 4 ein Drehzahlsignal 22 der Laderwelle 6 zugeführt werden, welches von einem einfachen Drehzahlsensor erzeugt wird. Die Drehzahl des Abgasturboladers 5 kann jedoch auch aus dem Ladedrucksignal 20 unter Einbeziehung von konstruktiv festgelegten Konstanten des Abgasturboladers 5 und der Brennkraftmaschine 1 ermittelt werden. Diese Konstanten sowie Wirkungsgrade der Strömungsmaschinen des Abgasturboladers 5 sowie alle weiteren bekannten Betriebskonstanten der Brennkraftmaschine können in bekannter Weise in einem Kennfeld 14 zum bedarfsweisen Abruf hinterlegt werden.

Mit dem beschriebenen Verfahren zur Regelung des Ladeluftmassenstroms kann bei einer Erhöhung der Lastanforderung aus einem stationären Betriebszustand der Brennkraftmaschine der angeforderte Betriebszustand mit einer dynamischen Verstellung der Turbinengeometrie bei optimalem Wirkungsgrad und Kraftstoffverbrauch der Brennkraftmaschine rasch eingenommen werden.

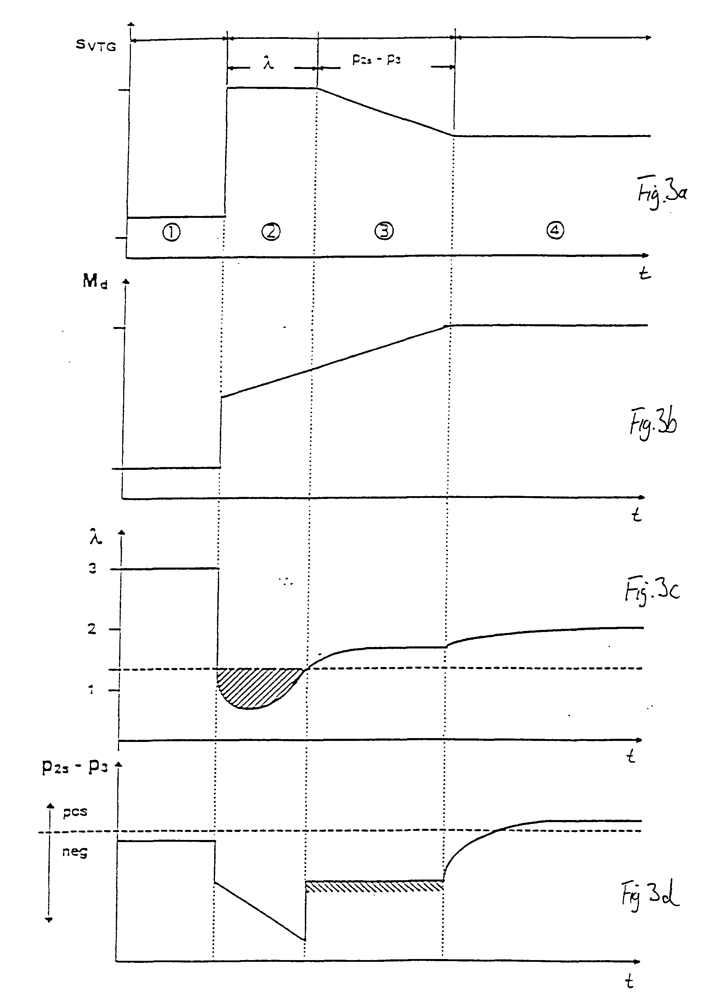

Die Fig. 3a bis 3d verdeutlichen in Schaubildern die Stellung der Turbinengeometrie (Fig 3a), den Anstieg des Drehmomentes M_{d} der Brennkraftmaschine (Fig. 3b), das Luftverhältnis λ (Fig. 3c) und das Spülgefälle p₂ₛ-p₃ (Fig. 3d) vor, während und nach dem Lastsprung. In einem stationären Betriebszustand mit geringer Betriebslast wird mit einem geringen Verstellweg s_{VTG} der Turbinengeometrie ein großer Anströmquerschnitt der Turbine freigegeben, wie Fig. 3a in der mit 1 bezifferten stationären Betriebsphase veranschaulicht. Dabei wird die Brennkraftmaschine verbrauchsoptimal mit einem hohen Luftverhältnis λ betrieben. Im Moment des Lastsprunges wird die Turbine in die Schließstellung überführt (Verschlußphase 2), wobei der ansteigende Abgasdruck den Abgasturbolader rasch beschleunigt und zu einem schnellen Ladedruckanstieg führt. Durch eine entsprechende Erhöhung der Kraftstoff-Einspritzmenge steigt das Drehmoment M_{d} sprungartig an, jedoch fällt auch zwangsläufig das Luftverhältnis λ unter einen vorgegebenen Grenzwert, der in Fig. 3c mit einer gestrichelten Linie angedeutet ist. Unterhalb dieses Grenzluftverhältnisses, welches als Verschlußführungsgröße der Reglereinheit vorgegeben wird, zum Beispiel im Ausführungsbeispiel λ = 1,3, besteht die Gefahr der Luftmangelverbrennung. Durch die rasche Beschleunigung des Abgasturboladers und den entsprechend raschen Aufbau des Ladedruckes steigt jedoch das Luftverhältnis λ schnell an und übersteigt den Wert der Verschlußführungsgröße. Das kritische Gebiet der Luftmangelverbrennung wird daher rasch verlassen. Beim überschreiten des Grenzluftverhältnisses λ = 1,3 wird die Verschlußphase 2 beendet, während der die Turbine in Schließstellung mit minimalem Anströmquerschnitt gehalten ist. Die Turbinengeometrie wird in einer dynamischen Stellphase 3 geregelt durch das Spülgefälle p₂ₛ - p₃ als Regelgröße kontinuierlich öffnend verstellt und nimmt schließlich die in der abschließenden Stationärphase 4 vorgesehene Querschnittsstellung ein. Während der vom Differenzdruck p₂ₛ - p₃ geregelten Stellphase bleibt das Spülgefälle zwangsläufig konstant auf dem als Regelführungsgröße vorgegebenen Wert. Als Regelführungsgröße wird dabei im Kennfeld ein im Hinblick auf den Wirkungsgrad der Brennkraftmaschine optimales Spülgefälle hinterlegt. Der Wert der zu hinterlegenden Regelführungsgröße wird abgestimmt mit der Konstruktion der Brennkraftmaschine festgelegt und kann beispielsweise 50 mbar betragen.

Die Regelung des Ladeluftmassenstroms unter Angleich an ein vorgegebenes, wirkungsgradoptimales Spülgefälle zwischen Einlaßtrakt und Auslaßtrakt der Brennkraftmaschine ermöglicht mit geringem Aufwand eine geregelte und kontrollierte Rückführung eines dem Abgasstrom abgegriffenen Teilstroms in den Einlaßtrakt der Brennkraftmaschine. Darüber hinaus ist eine vorteilhafte Regelung der durch den Abgasdruck beeinflußten Bremsleistung der Brennkraftmaschine mit dem Spülgefälle als Regelgröße möglich.

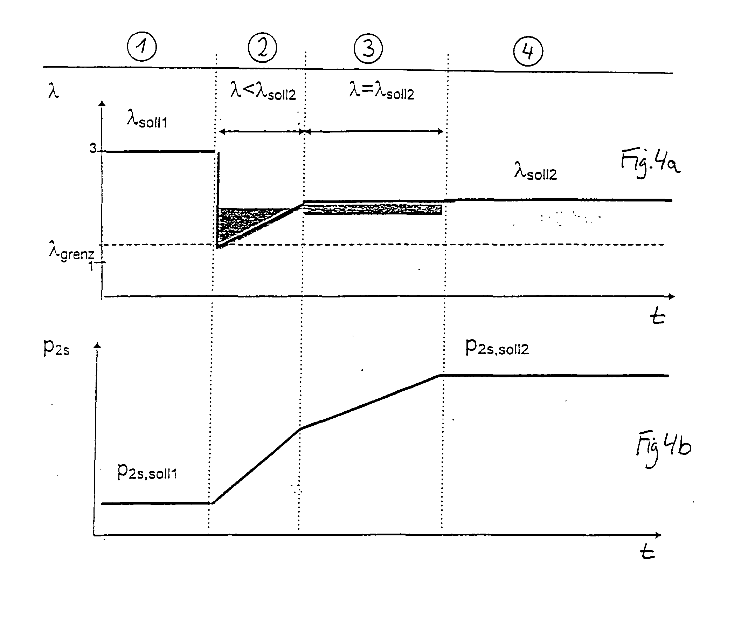

Fig. 4a zeigt den zeitlichen Verlauf des Luftverhältnisses λ bei der Gemischbildung für ein Verfahren zur Regelung des Ladeluftmassenstroms, bei dem jedem stationären Betriebszustand der Brennkraftmaschine ein bestimmter Sollwert λₛₒₗₗ des Luftverhältnisses zugeordnet wird und das Luftverhältnis λₛₒₗₗ₂ des angeforderten Betriebszustandes als Verschlußführungsgröße für die Einstellung der Turbinenleitvorrichtung vorgegeben wird. Wird im stationären Betrieb der Brennkraftmaschine mit dem spezifischen Luftverhältnis λₛₒₗₗ₁ während der Betriebsphase 1 die Lastanforderung erhöht, so wird die Turbinenleitvorrichtung in die Schließstellung überführt und somit der Anströmquerschnitt der Turbine verringert. Das Luftverhältnis fällt durch das Schließen der Leitvorrichtung augenblicklich, da entsprechend der Lasterhöhung die Kraftstoff-Einspritzmenge erhöht wird und der Aufbau des Ladedruckes eine bestimmte, von der Ladebeschleunigung abhängige Zeitspanne benötigt. Der zeitliche Verlauf des Ladedruckes von dem stationären Ladedruckwert p₂ₛ, ₛₒₗₗ₁ bis zum höheren Ladedrucksollwert p₂ₛ, soll2 nach dem Laststrom ist in Fig. 4b dargestellt. Der Ladedruck steigt in der Lastsprungphase 2 am stärksten, in der die Turbinenleitvorrichtung in der Schließstellung gehalten wird und somit der Abgasturbolader maximal beschleunigt wird. Mit dem Anstieg des Ladedruckes steigt das Luftverhältnis λ (Fig. 4a), wobei zum Zeitpunkt des Erreichens des angeforderten Sollwertes λₛₒₗₗ₂ die öffnende Stellbewegung der Turbinenleitvorrichtung in der Lastsprungphase 3 veranlaßt wird. Während der öffnenden Stellbewegung der variablen Turbinengeometrie in der Lastsprungphase 3 wird also das augenblickliche Luftverhältnis unter dem stationären Sollniveau λₛₒₗₗ₂ des angeforderten Betriebszustandes gehalten.

Um Luftmangelverbrennungen unmittelbar nach dem Schließen der Turbinenleitvorrichtung zu Beginn der Lastsprungphase 2 zu vermeiden, wird ein Grenzluftverhältnis λ_{Grenz} vorgegeben, welches die beim augenblicklich herrschenden Ladedruck maximal mögliche Kraftstoff-Einspritzmenge festlegt. Das Grenzluftverhältnis λ_{Grenz} liegt im beschriebenen Ausführungsbeispiel bei etwa λ = 1,3 und ist in der Fig. 4a strichliert dargestellt. Die Turbinenleitvorrichtung wird also so lange in der Schließstellung gehalten, wie das ermittelte Luftverhältnis geringer als der vorgegebene Sollwert des angeforderten Betriebszustandes der Brennkraftmaschine ist, welcher von der Reglereinheit einem Kennfeld entnommen wird. Während der Verschlußphase 2 baut sich der Ladedruck rascher auf als die begrenzbare Kraftstoff-Einspritzmenge, so daß das aktuelle Luftverhältnis λ zunimmt und den als Verschlußführungsgröße vorgegebenen Sollwert λ soll2 erreicht. Auf diese Weise kann der Wirkungsgrad der Brennkraftmaschine erhöht werden, da Ladungswechselverluste durch hohe Abgasgegendrucke, d.h. hohe Druckgefälle zwischen Ansaugtrakt und Auslaßtrakt der Brennkraftmaschine, vermieden werden, ohne daß teure Drucksensoren, etwa zur Erfassung des Abgasgegendruckes, mit hohem Aufwand zur Erzeugung von Stellregelgrößen installiert werden müssen.

## Patentansprüche

1. Verfahren zur Steuerung des Ladeluftmassenstroms (11) einer Brennkraftmaschine (1) mit einem Abgasturbolader (5) mit verstellbarer Turbinengeometrie im dynamischen Betrieb beim Lastsprung zwischen zwei stationären Betriebszuständen der Brennkraftmaschine (1) unter Zunahme der Betriebslast und einer entsprechend vorbestimmten Verringerung des Anströmquerschnitts der Turbine (7), wobei eine Leitvorrichtung (17) der Turbine (7) zunächst in Richtung Schließstellung mit minimalem Anströmquerschnitt gebracht und dort während einer Verschlußphase gehalten wird, bis ein laufend ermittelter Betriebsparameter den Sollwert einer vorbekannten Verschlußführungsgröße erreicht und die Leitvorrichtung (17) anschließend öffnend verstellt wird,
**dadurch gekennzeichnet, daß** ein Ladedruck (p₂ₛ) im Einlaßtrakt (2) der Brennkraftmaschine (1) ermittelt wird und als Betriebsparameter jedem Ladedruckwert eine mit dem Ladedruck (p2s) zunehmende Kraftstoff-Einspritzmenge zugeordnet wird, wobei als Verschlußführungsgröße eine dem angeforderten stationären Betriebszustand der Brennkraftmaschine (1) zugeordnete Soll-Einspritzmenge vorgegeben wird.

2. Verfahren nach Anspruch 1,
**dadurch gekennzeichnet, daß** der Betriebsparameter einem Kennfeld (14) entnommen wird, in dem Kennfelddaten (23) für die einem jeweiligen Ladedruck (p₂ₛ) zuzuordnende Kraftstoff-Einspritzmenge abgelegt sind.

3. Verfahren nach Anspruch 1 oder 2,
**dadurch gekennzeichnet, daß** am Ende der Verschlußphase unmittelbar der dem angeforderten stationären Betriebszustand entsprechende Anströmquerschnitt der Turbine eingestellt wird.

4. Verfahren zur Regelung des Ladeluftmassenstroms einer Brennkraftmaschine (1) mit einem Abgasturbolader (5) mit verstellbarer Turbinengeometrie im dynamischen Betrieb beim Lastsprung zwischen zwei stationären Betriebszuständen der Brennkraftmaschine (1) unter Zunahme der Betriebslast und einer entsprechend vorbestimmten Verringerung des Anströmquerschnitts der Turbine (7), wobei eine Leitvorrichtung (17) der Turbine (7) zunächst in Richtung Schließstellung mit minimalem Anströmquerschnitt gebracht und dort während einer Verschlußphase gehalten wird, bis ein laufend ermittelter Betriebsparameter den Sollwert einer vorbekannten Verschlußführungsgröße erreicht und die Leitvorrichtung (17) anschließend öffnend verstellt wird,
**dadurch gekennzeichnet, daß** eine kontinuierlich öffnende Stellbewegung der Turbinenleitvorrichtung (17) während einer Stellphase durch laufende Ermittlung und Angleich einer Stellregelgröße an eine vorbekannte Stellführungsgröße geregelt wird.

5. Verfahren nach Anspruch 4,
**dadurch gekennzeichnet, daß** als Betriebsparameter ein aktuelles Luftverhältnis (λ) des Ladeluftmassenstroms (11) und einer Kraftstoff-Einspritzmenge pro Arbeitsspiel der Brennkraftmaschine ermittelt wird.

6. Verfahren nach Anspruch 4 oder 5,
**dadurch gekennzeichnet, daß** als Stellregelgröße ein Differenzdruck (p₂ₛ - p₃) zwischen einem Ladedruck (p₂ₛ) im Einlaßtrakt (2) und einem Abgasdruck (p₃) im Auslaßtrakt (3) der Brennkraftmaschine (1) ermittelt wird und als Stellführungsgröße ein Soll-Differenzdruck (p₂ₛ - p₃) vorgegeben wird.

7. Verfahren nach Anspruch 6,
**dadurch gekennzeichnet, daß** der Ladedruck (p₂ₛ) gemessen und der Abgasdruck (p₃) aus dem Meßwert des Ladedruckes (p₂ₛ) und weiteren bekannten Steuermeßgrößen der Brennkraftmaschine (1) ermittelt wird.

8. Verfahren nach einem der Ansprüche 5 bis 7,
**dadurch gekennzeichnet, daß** ein bestimmtes Grenzluftverhältnis als Verschlußführungsgröße vorgegeben wird.

9. Verfahren nach Anspruch 4 und 5,
**dadurch gekennzeichnet, daß** als Verschlußführungsgröße und als Stellregelgröße ein bestimmtes Luftverhältnis (λₛₒₗₗ₂) für den angeforderten stationären Betriebszustand der Brennkraftmaschine (1) vorgegeben wird.

10. Verfahren nach Anspruch 8,
**dadurch gekennzeichnet, daß** ein Grenzluftverhältnis vorgegeben wird, bei dessen Erreichen nach dem Verbringen der Leitvorrichtung (17) der Turbine (7) in die Schließstellung die Kraftstoff-Einspritzmenge reduziert wird.

## Claims

1. Method for controlling the mass flow of supercharge air (11) in a combustion engine
(1) with an exhaust gas turbocharger (5) having adjustable turbine geometry in dynamic operation when the load changes between two steady-state operating conditions of the combustion engine (1) such that the operating load increases with a correspondingly predetermined reduction of the flow cross-section of the turbine (7), a control device (17) of the turbine (7) first being adjusted in the direction of closure to give the minimum flow cross-section and being held there during a closure phase, until a continuously determined operating parameter reaches the nominal value of a predetermined closure control magnitude, the control device (17) then being adjusted in the opening direction,
**characterised in that**
a supercharge pressure (p₂ₛ) in the inlet duct (2) of the combustion engine (1) is determined and as an operating parameter a fuel injection quantity that increases with the supercharge pressure (p₂ₛ) is associated with each supercharge pressure value, and
as the closure control magnitude a nominal injection quantity associated with the required steady-state operating condition of the combustion engine (1) is specified.

2. Method according to Claim 1,
**characterised in that**
the operating parameter is taken from a performance matrix (14) in which performance data (23) for the fuel injection quantity associated with each respective supercharge pressure (p₂ₛ) are stored.

3. Method according to Claims 1 or 2,
**characterised in that**
directly at the end of the closure phase, the turbine flow cross-section corresponding to the required steady-state operating condition is established.

4. Method for controlling the mass flow of supercharge air in a combustion engine (1) with an exhaust gas turbocharger (5) having adjustable turbine geometry in dynamic operation when the load changes between two steady-state operating conditions of the combustion engine (1) such that the operating load increases with a correspondingly predetermined reduction of the flow cross-section of the turbine (7), a control device (17) of the turbine (7) first being adjusted in the direction of closure to give the minimum flow cross-section and being held there during a closure phase, until a continuously determined operating parameter reaches the nominal value of a predetermined closure control magnitude, the control device (17) then being adjusted in the opening direction,
**characterised in that**
a continuous positioning movement of the turbine control device (17) in the opening direction is regulated during a positioning phase by means of the continuous determination and adaptation of a position-regulating magnitude to a predetermined position control magnitude.

5. Method according to Claim 4,
**characterised in that**
as the operating parameter a current air proportion (λ) of the supercharge air mass flow (11) and a fuel injection quantity for each working range of the combustion engine is determined.

6. Method according to Claims 4 or 5,
**characterised in that**
as the position-regulating magnitude a pressure difference (p₂ₛ - p₃) between a supercharge pressure (p₂ₛ) in the inlet duct (2) and an exhaust gas pressure (p₃) in the outlet duct (3) of the combustion engine is determined, and as the position control magnitude a nominal pressure difference (p₂ₛ - p₃) is specified.

7. Method according to Claim 6,
**characterised in that**
the supercharge pressure (p₂ₛ) is measured and the exhaust gas pressure (p₃) is determined from the measured value of the supercharge pressure (p₂ₛ) and other known measured control magnitudes of the combustion engine (1).

8. Method according to any of Claims 5 to 7,
**characterised in that**
a given limiting air proportion is specified as the closure control magnitude.

9. Method according to Claims 4 and 5,
**characterised in that**
as the closure control magnitude and as the position-regulating magnitude, a given air proportion (λ_{nom 2}) for the required steady-state operating condition of the combustion engine (1) is specified.

10. Method according to Claim 8,
**characterised in that**
a limiting air proportion is specified, upon reaching which after the control device (17) of the turbine (7) has been brought to its closed position, the fuel injection quantity is reduced.

## Revendications

1. Procédé pour la commande de l'écoulement de masse (11) de l'air chargé dans un moteur à combustion interne (1) au moyen d'un turbocompresseur à gaz d'échappement (5) avec géométrie réglable de la turbine en fonctionnement dynamique lors du saut de charge entre deux états de fonctionnement stationnaires du moteur à combustion interne (1) lors d'une augmentation de la charge de fonctionnement et d'une réduction prédéterminée correspondante de la section d'écoulement incidente de la turbine (7), dans lequel un dispositif déflecteur (17) de la turbine (7) est tout d'abord amené en direction de la position de fermeture avec une section d'écoulement minimum, et y est maintenu pendant une phase de fermeture, jusqu'à ce qu'un paramètre de fonctionnement déterminé en continu atteint la valeur de consigne d'une grandeur pilote de fermeture préalablement connue, et le dispositif déflecteur (17) est ensuite déplacé en direction d'ouverture,
**caractérisé en ce que** l'on détermine une pression de chargement (P2s) dans le circuit d'admission (2) du moteur à combustion interne (1), et **en ce que** l'on associe à chaque valeur de la pression de chargement à titre de paramètre de fonctionnement une quantité de carburant injectée qui augmente avec la pression de chargement (p2s), et l'on impose à titre de valeur pilote de fermeture une quantité d'injection de consigne associée à la condition de fonctionnement stationnaire requise du moteur à combustion interne (1).

2. Procédé selon la revendication 1, **caractérisé en ce que** le paramètre de fonctionnement est prélevé d'un champ de caractéristiques (14) dans lequel sont déposées des données caractéristiques (23) pour la quantité de carburant injecté à associer à une pression de chargement respective (P2s).

3. Procédé selon l'une ou l'autre des revendications 1 et 2, **caractérisé en ce qu'**à la fin de la phase de fermeture on établit immédiatement pour la turbine la section d'écoulement qui correspond à l'état de fonctionnement stationnaire requis.

4. Procédé pour la régulation de l'écoulement de masse de l'air chargé dans un moteur à combustion interne (1) avec un turbocompresseur (5) à gaz d'échappement avec géométrie variable de la turbine en fonctionnement dynamique lors du saut de charge entre deux états de fonctionnement stationnaires du moteur à combustion interne (1) sous augmentation de la charge de fonctionnement et réduction prédéterminée correspondante de la section d'écoulement de la turbine (7), dans lequel un dispositif déflecteur (17) de la turbine (7) est tout d'abord amené en direction de la position de fermeture avec section d'écoulement minimum, et y est maintenu pendant une phase de fermeture, jusqu'à ce qu'un paramètre de fonctionnement déterminé en continu a atteint la valeur de consigne d'une grandeur pilote de fermeture préalablement connue, et le dispositif déflecteur (17) est ensuite déplacé en ouverture,
**caractérisé en ce qu'**un mouvement de positionnement en ouverture qui se produit en continu du dispositif déflecteur (17) de la turbine est régulé pendant une phase de réglage en déterminant en permanence et en comparant une grandeur de régulation et une grandeur pilote préalablement connue.

5. Procédé selon la revendication 4, **caractérisé en ce que** l'on détermine à titre de paramètre de fonctionnement un rapport actuel (λ) entre le courant de masse (11) de l'air chargé et une quantité de carburant injectée par cycle de travail du moteur à combustion interne.

6. Procédé selon l'une ou l'autre des revendications 4 et 5, **caractérisé en ce que** l'on détermine à titre de grandeur de régulation une pression différentielle (P2s - P3) entre une pression de chargement (P2s) dans le circuit d'admission (2) et une pression d'échappement (P3) dans le circuit d'échappement (3) du moteur combustion interne (1), et **en ce que** l'on impose une pression différentielle de consigne (P2s - P3) à titre de grandeur pilote.

7. Procédé selon la revendication 6, **caractérisé en ce que** la pression de chargement (P2s) est mesurée, et la pression d'échappement (P3) est déterminée à partir de la valeur mesurée de la pression de chargement (P2s) et d'autres grandeurs de mesure de commande connues du moteur à combustion interne (1).

8. Procédé selon l'une des revendications 5 à 7, **caractérisé en ce que** l'on impose à titre de grandeur pilote de fermeture un rapport d'air limite déterminé.

9. Procédé selon les revendications 4 et 5, **caractérisé en ce que** l'on impose à titre de grandeur pilote de fermeture et à titre de grandeur de régulation un rapport déterminé d'air (λₛₒₗₗ₂) pour l'état de fonctionnement stationnaire requis du moteur à combustion interne (1).

10. Procédé selon la revendication 8, **caractérisé en ce que** l'on impose un rapport d'air limite auquel, lorsqu'il est atteint, la quantité de carburant injectée est réduite après avoir amené le dispositif déflecteur (17) de la turbine (7) dans la position de fermeture.
